# FASCICULE DE BREVET EUROPEEN

(11) **EP 3 007 935 B1**
(45) Date de publication et mention de la délivrance du brevet: **14.03.2018**
(21) Numéro de dépôt: 14729405.2
(22) Date de dépôt: 12.05.2014
(51) Int. Cl.: B60R 13/02, B60J 5/10

(54) **GARNITURE EN MATIÈRE PLASTIQUE DESTINÉE À ETRE FIXÉE SUR LA PARTIE INFÉRIEURE DE LA FACE INTÉRIEURE DU VOLET ARRIÈRE D'UN VÉHICULE AUTOMOBILE**
KUNSTSTOFFVERKLEIDUNG ZUM BEFESTIGEN AUF EINEM UNTERTEIL DER INNENFLÄCHE DER HECKKLAPPE EINES KRAFTFAHRZEUGS
PLASTIC TRIM INTENDED FOR BEING ATTACHED TO THE LOWER PORTION OF THE INNER SURFACE OF THE TAILGATE OF A MOTOR VEHICLE

(30) Priorité: 10.06.2013 FR 1355308
(43) Date de publication de la demande: 20.04.2016
(73) Titulaire: PSA Automobiles SA, 78300 Poissy (FR)
(72) Inventeur: SCHIRMER, Vincent, F-90160 Perouse (FR)
(74) Mandataire: Fosse, Danièle
(86) Numéro de dépôt international: PCT/FR2014/051089
(87) Numéro de publication internationale: WO 2014/199031

(56) Documents cités:
- EP-A1- 1 803 594
- WO-A1-02/057102
- DE-B4- 10 362 050

## Description

La présente invention concerne un volet arrière d'un véhicule automobile et une garniture en matière plastique destinée à être fixée sur la partie inférieure de la face intérieure du volet arrière d'un véhicule automobile.

L'invention concerne également un volet arrière de véhicule automobile équipé d'une telle garniture. EP 1 803 594 A1 divulgue un volet arrière selon le préambule de la revendication 1. La figure 1 est une vue en perspective montrant la partie supérieure de la face intérieure d'une garniture connue qui est destinée à être fixée sur le volet arrière d'un véhicule.

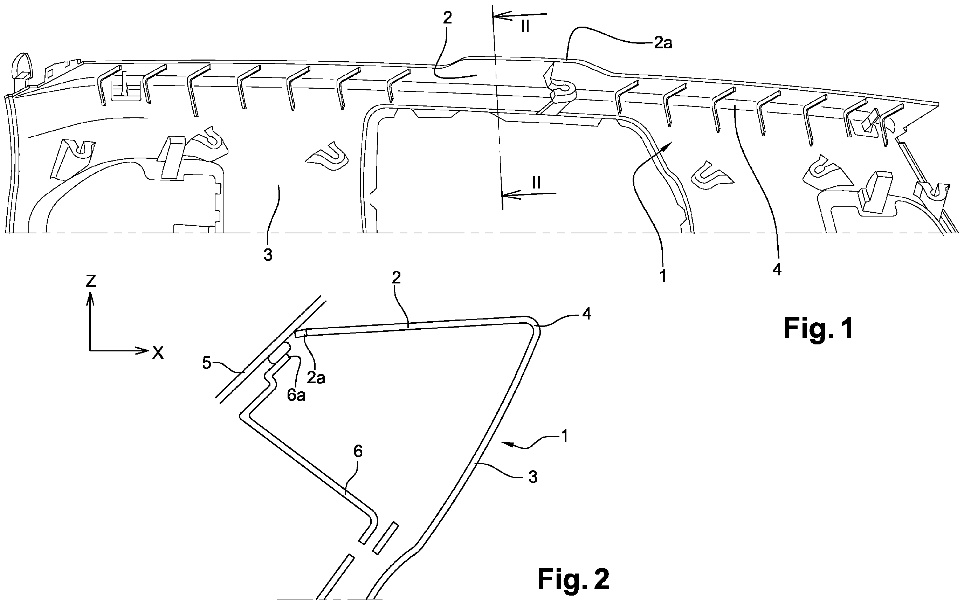

La figure 2 est une vue en coupe suivant le plan II-II de la figure 1 montrant la garniture en position sur un volet arrière.

Les figures 1 et 2 montrent que le bord supérieur de la garniture 1 comporte une paroi 2 formant un dièdre avec le panneau 3 constituant le reste de la garniture 1.

On voit sur la figure 2 que l'extrémité 2a de la paroi 2 opposée au sommet 4 du dièdre est, lorsque la garniture 1 est montée, en appui sur la face intérieure du panneau extérieur 5 du volet arrière.

Sur la figure 2, la référence 6 désigne la doublure du volet dont la feuillure 6a est soudée au panneau extérieur 5 du volet.

Par ailleurs, l'axe Z désigne l'axe vertical du véhicule et X l'axe longitudinal.

On voit sur cette figure 2, que la paroi 2 de la garniture 1 n'est pas verrouillée par rapport aux axes X et Z et peut ainsi notamment s'affaisser.

De plus, rien ne permet de garantir que cette paroi 2 soit bien positionnée lors du montage de la garniture 1.

Il est en effet nécessaire que l'extrémité 2a de la paroi 2 soit positionnée au-dessus de la feuillure 6a de la doublure 6 du volet.

Le but de la présente invention est de remédier à cet inconvénient.

Ce but est atteint, selon l'invention, grâce à un volet arrière d'un véhicule automobile comprenant un panneau extérieur muni d'une doublure intérieure et une garniture en matière plastique fixée sur la partie inférieure de la face intérieure du volet arrière d'un véhicule automobile, le bord supérieur de la garniture comportant une paroi formant un dièdre avec le panneau constituant le reste de la garniture, l'extrémité de cette paroi étant destinée à s'appuyer sur la face intérieure du panneau extérieur du volet, cette garniture étant caractérisée en ce qu'elle comprend à l'intérieur du dièdre formé par ladite paroi et ledit panneau de la garniture au moins une partie en saillie moulée avec ladite paroi et ledit panneau dont l'extrémité située à l'opposé du sommet du dièdre comporte une patte flexible pouvant s'encliqueter dans un trou réalisé dans la partie supérieure de la doublure intérieure du volet arrière.

La partie en saillie moulée à l'intérieur du dièdre formé par la paroi supérieure et le panneau de la garniture permet de verrouiller cette garniture suivant les axes X et Z du véhicule.

Ainsi, la paroi supérieure de la garniture ne risque pas de s'affaisser ou d'être mal positionnée.

De plus, la partie en saillie ci-dessus facilite le montage de la garniture et permet de faire une économie d'agrafes et de réduire le temps de montage.

Dans une version préférée de l'invention, la garniture comprend deux parties en saillie disposées sensiblement symétriquement de part et d'autre du milieu de la garniture.

Ces deux parties permettent d'apporter une solution encore plus efficace au problème qui est à la base de l'invention.

De préférence également, ladite partie ou lesdites parties en saillie comprennent chacune une cloison s'étendant dans un plan sensiblement perpendiculaire à ladite paroi et audit panneau, cette cloison étant moulée avec cette paroi et ce panneau.

Cette cloison permet de figer l'angle du dièdre formé par la paroi supérieure et le panneau de la garniture.

Dans un mode de réalisation avantageux de l'invention, le bord de la cloison ci-dessus opposé au sommet du dièdre comporte un rebord perpendiculaire à ladite cloison qui porte ladite patte flexible.

Ce rebord raidit la cloison et supporte efficacement la patte flexible qui permet de verrouiller la garniture à la doublure du volet.

Selon d'autres particularités avantageuses de l'invention :
- lorsque la garniture est en position sur le volet arrière, ledit rebord est sensiblement parallèle à la partie de ladite doublure du volet qui comporte le trou dans lequel peut s'encliqueter ladite patte flexible ;
- ledit bord de la cloison comporte une partie qui est reliée à ladite paroi et qui porte un rebord qui est relié au rebord qui porte ladite patte flexible ;
- ladite cloison comporte une nervure qui relie ledit rebord dans une zone proche de ladite patte flexible et ladite paroi ;
- ladite patte flexible comprend une première partie qui fait saillie dans une direction opposée au sommet dudit dièdre et une seconde partie formant avec la première partie un V ouvert vers le sommet du dièdre.

D'autres particularités et avantages de l'invention apparaîtront encore tout au long de la description ci-après.

Aux dessins annexés, donnés à titre d'exemples, non limitatifs :
- la figure 3 est une vue en perspective, analogue à la figure 1, montrant une garniture de volet selon l'invention,
- la figure 4 est une vue en coupe suivant le plan IV-IV de la figure 3, montrant la garniture en cours de montage sur le volet d'un véhicule,
- la figure 5 est une vue analogue à la figure 4, montrant la garniture en position verrouillée sur le volet.

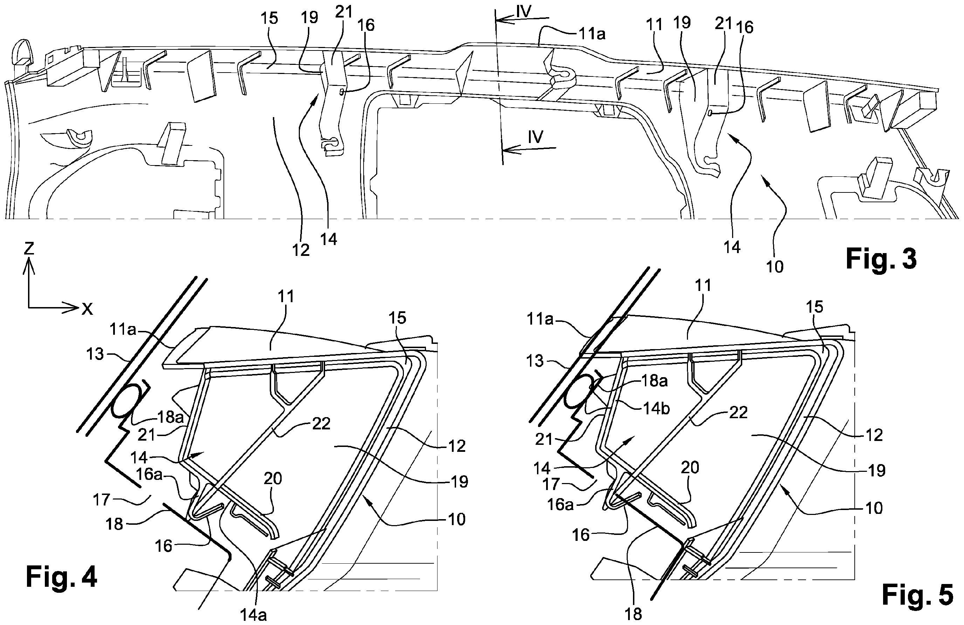

Les figures 3 à 5 représentent une garniture 10 en matière plastique destinée à être fixée sur la partie inférieure de la face intérieure du volet arrière d'un véhicule automobile.

Le bord supérieur de la garniture 10 comporte une paroi 11 formant un dièdre avec le panneau 12 constituant le reste de la garniture.

L'extrémité 11a de cette paroi 11 comporte une lèvre destinée à s'appuyer sur la face intérieure du panneau extérieur 13 du volet, comme montré sur la figure 5.

Conformément à l'invention, la garniture 10 comprend à l'intérieur du dièdre formé par la paroi 11 et le panneau 12 de la garniture, deux parties en saillie 14 moulées avec la paroi 11 et le panneau 12 dont l'extrémité 14a située à l'opposé du sommet 15 du dièdre comporte une patte flexible 16 pouvant s'encliqueter dans un trou 17 réalisé dans la partie supérieure de la doublure intérieure 18 du volet arrière, comme montré sur les figures 4 et 5.

Les deux parties en saillie 14 sont disposées sensiblement symétriquement de part et d'autre du milieu de la garniture 10.

Cependant, une seule partie en saillie 14 pourrait suffire dans certains cas.

Les parties en saillie 14 comprennent chacune une cloison 19 s'étendant dans un plan sensiblement perpendiculaire à la paroi 11 et au panneau 12.

Cette cloison 19 est également moulée avec cette paroi 11 et ce panneau 12.

Par ailleurs, le bord de la cloison 19 opposé au sommet 15 du dièdre comporte un rebord 20 perpendiculaire à la cloison 19.

Ce rebord 20 porte la patte flexible 16.

Les figures 4 et 5 montrent que lorsque la garniture 10 est en position sur le volet arrière, le rebord 20 est sensiblement parallèle à la partie de la doublure 18 du volet qui comporte le trou 17 dans lequel peut s'encliqueter la patte flexible 16.

En outre, le bord de la cloison 19 comporte une partie 14b qui est reliée à la paroi 11 et qui porte un rebord 21 qui est relié au rebord 20 qui porte la patte flexible 16.

De plus, la cloison 19 comporte une nervure 22 qui s'étend entre le rebord 20 dans une zone proche de la patte flexible 16 et la paroi 11.

Les rebords 20 et 21 ainsi que la nervure 22 raidissent la cloison 19.

Les figures 4 et 5 montrent également que chaque patte flexible 16 comprend une première partie 16a qui fait saillie dans une direction opposée au sommet 15 du dièdre et une seconde partie 16 formant avec la première partie un V ouvert vers le sommet 15 du dièdre.

Lors du montage de la garniture 10 selon l'invention, la patte flexible 16, 16a vient s'appuyer sur la partie supérieure 18 de la doublure du volet, ce qui permet à l'extrémité 11a de la paroi supérieure 11 de la garniture 10 de se positionner au-dessus de la feuillure 18a de la doublure qui est soudée au panneau extérieur 13 du volet.

En poussant la garniture 10 vers le panneau 13 du volet, la patte 16, 16a vient se positionner sur le trou 17 de la doublure 18 puis s'encliqueter dans ce trou 17.

Dans cette position, l'extrémité de la lèvre 11a portée par la paroi supérieure 11 de la garniture s'appuie de façon étanche contre le panneau 13 du volet.

Par ailleurs, la patte 16, 16a verrouille la garniture 10 par rapport aux axes X et Z, de sorte que la paroi 11 de la garniture ne peut plus s'affaisser sous la feuillure 18a.

Outre les avantages cités plus haut, l'invention présente également un avantage sur le plan des coûts, car elle permet d'économiser deux agrafes pour fixer la garniture 10 au volet arrière.

## Revendications

1. Volet arrière de véhicule automobile comprenant un panneau extérieur (13) muni d'une doublure intérieure (18) et une garniture (10) en matière plastique fixée sur la partie inférieure de la face intérieure du volet arrière d'un véhicule automobile, le bord supérieur de la garniture comportant une paroi (11) formant un dièdre avec le panneau (12) constituant le reste de la garniture (10), la garniture (10) comprenant à l'intérieur du dièdre formé par ladite paroi (11) et ledit panneau (12) de la garniture au moins une partie (14) en saillie moulée avec ladite paroi (11) et ledit panneau (12),
**caractérisé en ce que** :
l'extrémité (14a) de la partie (14) en saillie située à l'opposé du sommet du dièdre comporte une patte flexible (16) destinée à s'encliqueter dans un trou (17) réalisé dans la partie supérieure de la doublure intérieure (18) du volet arrière, et
l'extrémité (11a) de cette paroi (11) est destinée à s'appuyer sur la face intérieure du panneau extérieur (13) du volet.

2. Volet selon la revendication 1, **caractérisé en ce que** la garniture comprend deux parties en saillie (14) disposées sensiblement symétriquement de part et d'autre du milieu de la garniture (10).

3. Volet selon l'une des revendications 1 ou 2, **caractérisé en ce que** ladite partie ou lesdites parties (14) en saillie comprennent chacune une cloison (19) s'étendant dans un plan sensiblement perpendiculaire à ladite paroi (11) et audit panneau (12), cette cloison (19) étant moulée avec cette paroi (11) et ce panneau (12).

4. Volet selon la revendication 3, **caractérisé en ce que** le bord de cette cloison (19) opposé au sommet (15) du dièdre comporte un rebord (20) perpendiculaire à ladite cloison (19) qui porte ladite patte flexible (16).

5. Volet selon la revendication 4, **caractérisé en ce que**, lorsque cette garniture (10) est en position sur le volet arrière, ledit rebord (20) est sensiblement parallèle à la partie de ladite doublure (18) du volet qui comporte le trou (17) dans lequel peut s'encliqueter ladite patte flexible (16).

6. Volet selon l'une des revendications 4 ou 5, **caractérisé en ce que** ledit bord de la cloison (19) comporte une partie qui est reliée à ladite paroi (11) et qui porte un rebord (21) qui est relié au rebord (20) qui porte ladite patte flexible (16).

7. Volet selon l'une des revendications 4 à 6, **caractérisé en ce que** ladite cloison (19) comporte une nervure (22) qui relie ledit rebord (20) dans une zone proche de ladite patte flexible (16) et ladite paroi (11).

8. Volet selon l'une des revendications 1 à 7, **caractérisé en ce que** ladite patte flexible comprend une première partie (16a) qui fait saillie dans une direction opposée au sommet (15) dudit dièdre et une seconde partie (16) formant avec la première partie un V ouvert vers le sommet (15) du dièdre.

9. Garniture (10) en matière plastique pour un volet arrière selon l'une des revendications 1 à 8, dont le bord supérieur comporte une paroi (11) formant un dièdre avec le panneau (12) constituant le reste de la garniture (10), ladite garniture (10) comprenant à l'intérieur du dièdre formé par ladite paroi (11) et ledit panneau (12) de la garniture au moins une partie (14) en saillie moulée avec ladite paroi (11) et ledit panneau (12), **caractérisée en ce que** l'extrémité (14a) de la partie (14) en saillie située à l'opposé du sommet (15) du dièdre comporte une patte flexible (16) qui comprend une première partie qui fait saillie dans une direction opposée au sommet dudit dièdre et une seconde partie formant avec la première partie un V ouvert vers le sommet du dièdre.

## Patentansprüche

1. Heckklappe eines Kraftfahrzeuges, eine Außenplatte (13) umfassend, die mit einer Innenverkleidung (18) und einem Besatz (10) aus Kunststoffmaterial versehen ist, die im unteren Abschnitt der Innenseite der Heckklappe eines Kraftfahrzeugs befestigt wird, wobei der obere Rand des Besatzes eine Wand (11) umfasst, die mit der Platte (12) ein Dieder formt, das den Rest der Verkleidung (10) darstellt, wobei die Verkleidung (10) im Innern des Dieders, der durch die Wand (11) und die Platte (12) der Verkleidung geformt wird mindestens einen vorstehenden Abschnitt (14) umfasst, der mit der Wand (11) und der Platte (12) gegossen wird,
**dadurch gekennzeichnet, dass**:
das Ende(14a) des vorstehenden Abschnitts (14) gegenüber dem höchsten Punkt des Dieders eine flexible Lasche (16) umfasst, die dazu bestimmt ist, in ein Loch (17) einzuklicken, das im oberen Abschnitt der Innenverkleidung (18) der Heckklappe realisiert ist, und
das Ende (11a) dieser Wand (11) dazu bestimmt ist, auf der Innenseite der Außenplatte (13) der Klappe aufzuliegen.

2. Heckklappe nach Anspruch 1, **dadurch gekennzeichnet, dass** der Besatz zwei vorstehende Abschnitte (14) umfasst, die in etwa symmetrisch beiderseits der Mitte des Besatzes (10) angeordnet sind.

3. Heckklappe nach einem der Ansprüche 1 oder 2, **dadurch gekennzeichnet, dass** der vorspringende Abschnitt oder die vorspringenden Abschnitte (14) jeweils über eine Trennwand (19) umfassen, die sich in einer in etwa senkrechten Ebene zu der Wand (11) und zu der Platte (12) erstreckt, wobei diese Trennwand (19) mit dieser Wand (11) und dieser Platte (12) gegossen wird.

4. Heckklappe nach Anspruch 3, **dadurch gekennzeichnet, dass** der Rand dieser Trennwand (19) gegenüber dem höchsten Punkt (15) des Dieders eine Kante (20) senkrecht zu der Trennwand (19) umfasst, die die flexible Lasche (16) trägt.

5. Heckklappe nach Anspruch 4, **dadurch gekennzeichnet, dass** wenn dieser Besatz (10) in Position an der Heckklappe ist, die Kante (20) in etwa parallel zum Abschnitt der Verkleidung (18) der Heckklappe liegt, die das Loch (17) umfasst, in das die flexible Lasche (16) einklicken kann.

6. Heckklappe nach einem der Ansprüche 4 oder 5, **dadurch gekennzeichnet, dass** der Rand der Trennwand (19) einen Abschnitt umfasst, der mit der Wand (11) verbunden ist und eine Kante (21) trägt, die mit der Kante (20) verbunden ist, die die flexible Lasche (16) trägt.

7. Heckklappe nach einem der Ansprüche 4 bis 6, **dadurch gekennzeichnet, dass** die Trennwand (19) eine Rippe (22) umfasst, die die Kante (20) in einem nahegelegenen Bereich der flexiblen Lasche (16) und der Wand (11) verbindet.

8. Heckklappe nach einem der Ansprüche 1 bis 7, **dadurch gekennzeichnet, dass** die flexible Lasche einen ersten Abschnitt (16a) umfasst, der in eine entgegengesetzte Richtung zum höchsten Punkt (15) des Dieders vorspringt und einen zweiten Abschnitt(16), der mit dem ersten Abschnitt ein zum höchsten Punkt (15) des Dieders offenes V formt.

9. Besatz (10) aus Kunststoffmaterial für eine Heckklappe nach einem der Ansprüche 1 bis 8, dessen oberer Rand eine Wand (11) umfasst, die mit der Platte (12), die den Rest des Besatzes (10) darstellt, ein Dieder bildet, wobei der Besatz (10) im Inneren des Dieders, das durch die Wand (11) und die Platte (12) des Besatzes geformt wird mindestens einen vorstehenden Abschnitt (14) umfasst, der mit der Wand (11) und der Platte (12) gegossen wird, **dadurch gekennzeichnet, dass** das Ende (14a) des vorspringenden Abschnitts (14), das sich gegenüber dem höchsten Punkt (15) des Dieders befindet, eine flexible Lasche (16) umfasst, die einen ersten Abschnitt umfasst, der in eine entgegengesetzte Richtung zum höchsten Punkt des Dieders vorspringt und einen zweiten Abschnitt, der mit dem ersten Abschnitt ein zum höchsten Punkt des Dieders offenes V formt.

## Claims

1. Tailgate of a motor vehicle comprising an outer panel (13) provided with an inner lining (18) and a plastic trim (10) attached to the lower portion of the inner face of the tailgate of a motor vehicle, with the upper edge of the fitting comprising a wall (11) forming a dihedral with the panel (12) which constitutes the rest of the fitting (10), with the fitting (10) comprising inside the dihedral formed by said wall (11) and said panel (12) of the fitting at least one projection (14) moulded with said wall (11) and said panel (12), **characterised in that**:
the end (14a) of the projection (14) located opposite the apex of the dihedral comprises a flexible tab (16) that can be snap-fit into a hole (17) formed in the upper portion of the inner lining (18) of the tailgate, and the end (11a) of this wall (11) is to be supported on the inner face of the outer panel (13) of the tailgate.

2. Tailgate according to claim 1, **characterised in that** the fitting comprises two projections (14) arranged substantially symmetrically on either side of the middle of the fitting (10).

3. Tailgate according to one of claims 1 or 2, **characterised in that** said projection or projections (14) each comprise a partition (19) extending in a plane substantially perpendicular to said wall (11) and to said panel (12), with this partition (19) being moulded with this wall (11) and this panel (12).

4. Tailgate according to claim 3, **characterised in that** the edge of this partition (19) opposite the apex (15) of the dihedral comprises an edge (20) perpendicular to said partition (19) that carries said flexible tab (16).

5. Tailgate according to claim 4, **characterised in that**, when this fitting (10) is in position on the tailgate, said edge (20) is substantially parallel to the portion of said lining (18) of the tailgate which comprises the hole (17) wherein said flexible tab (16) can be snap-fit.

6. Tailgate according to one of claims 4 or 5, **characterised in that** said edge of the partition (19) comprises a portion that is connected to said wall (11) and that carries an edge (21) that is connected to the edge (20) that carries said flexible tab (16).

7. Tailgate according to one of claims 4 to 6, **characterised in that** said partition (19) comprises a rib (22) that connects said edge (20) in a zone close to said flexible tab (16) and said wall (11).

8. Tailgate according to one of claims 1 to 7, **characterised in that** said flexible tab comprises a first portion (16a) that projects in a direction opposite the apex (15) of said dihedral and a second portion (16) forming with the first portion a V open to the apex (15) of the dihedral.

9. Plastic fitting (10) for a tailgate according to one of claims 1 to 8, of which the upper edge comprises a wall (11) forming a dihedral with the panel (12) which constitutes the rest of the fitting (10), said fitting (10) comprising inside the dihedral formed by said wall (11) and said panel (12) of the fitting at least one projection (14) moulded with said wall (11) and said panel (12), **characterised in that** the end (14a) of the projection (14) located opposite the apex (15) of the dihedral comprises a flexible tab (16) that comprises a first portion that projects in a direction opposite the apex of said dihedral and a second portion forming with the first portion a V open to the apex of the dihedral.
